(19) **Europäisches Patentamt European Patent Office Office européen des brevets**

(11) **EP 4 015 239 B1**

(12) **EUROPEAN PATENT SPECIFICATION**

(45) Date of publication and mention
of the grant of the patent:
**04.02.2026 Bulletin 2026/06**

(21) Application number: **21213961.2**

(22) Date of filing: **13.12.2021**

(51) International Patent Classification (IPC):
*B60C 1/00* (2006.01)      *B60C 11/00* (2006.01)
*B60C 11/03* (2006.01)     *C08L 7/00* (2006.01)
*C08L 9/00* (2006.01)      *C08K 3/36* (2006.01)

(52) Cooperative Patent Classification (CPC):
(C-Sets available)
**B60C 1/0016; B60C 11/005; B60C 11/0306;**
**B60C 11/033; C08L 7/00;** B60C 2011/0016;
B60C 2011/0025; B60C 2011/0033;
B60C 2011/0346; B60C 2011/0348;
B60C 2011/0358; B60C 2011/0362;
B60C 2011/1213                                    (Cont.)

(54) **TIRE**

REIFEN

PNEUMATIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **18.12.2020 JP 2020210290**
**10.11.2021 JP 2021183412**

(43) Date of publication of application:
**22.06.2022 Bulletin 2022/25**

(73) Proprietor: **Sumitomo Rubber Industries, Ltd.**
**Kobe-shi, Hyogo-ken 651-0072 (JP)**

(72) Inventor: **OSHIMO, Masaki**
**Kobe-shi, Hyogo, 651-0072 (JP)**

(74) Representative: **Manitz Finsterwald**
**Patent- und Rechtsanwaltspartnerschaft mbB**
**Martin-Greif-Straße 1**
**80336 München (DE)**

(56) References cited:
**WO-A1-2008/105363      JP-A- 2012 136 581**

(52) Cooperative Patent Classification (CPC): (Cont.)

C-Sets
**C08L 7/00, C08L 9/00, C08L 91/06, C08K 3/04,
C08K 3/36, C08K 5/548, C08K 5/18, C08K 5/09,
C08K 3/22, C08K 3/06, C08K 5/47, C08K 5/31**

**Description**

TECHNICAL FIELD

The present disclosure relates to a tire.

BACKGROUND OF THE INVENTION

As a method of improving abrasion resistance of a tire for a truck/bus, a technique of making carbon black to be micronized or to be a high structure is known (for example, JP H06-279624 A). JP2012136581 discloses a rubber composition for tires exhibiting fuel efficiency and abrasion resistance.

SUMMARY OF THE INVENTION

It cannot be said that the above-described method of making carbon black to be micronized or to be a high structure is sufficient for improving fuel efficiency of a tire. Moreover, dispersibility of carbon black also deteriorates due to deterioration of processability associated with micronization, and conversely, abrasion resistance of a tire may deteriorate. Therefore, there is a limit to a method of improving performance by improving a conventional carbon black.

Moreover, due to influences of recent environmental regulations, there has been a growing demand for achieving abrasion resistance, as well as fuel efficiency, breaking resistance, and the like at a high level, even in a tire for a truck/bus.

An object of the present disclosure is to provide a tire having improved overall performance of fuel efficiency, breaking resistance, and abrasion resistance.

As a result of intensive studies, it is found that the above-described problems can be solved by producing a tire comprising a tread, wherein the tread is formed of a rubber composition comprising a predetermined rubber component and a predetermined silica, wherein a loss tangent tan $\delta$ of the rubber composition is set within a predetermined range, and wherein a ratio of a total area of lateral grooves to a total area of circumferential grooves is within a predetermined range.

That is, the present disclosure relates to a tire comprising a tread, wherein a cap rubber layer of an outer surface of the tread is formed of a rubber composition comprising a rubber component having a total content of 90% by mass or more of an isoprene-based rubber and a butadiene rubber and silica having a nitrogen adsorption specific surface area (N$_2$SA) of 180 m$^2$/g or more, wherein a total cis content in the butadiene rubber is less than 90% by mass, wherein a tan $\delta$ at 70°C of the rubber composition of the cap rubber layer is less than 0.15, wherein the tread has circumferential grooves extending continuously in a tire circumferential direction and lateral grooves extending in a tire width direction, wherein a ratio of a total area S2 of the lateral grooves to a total area S1 of the circumferential grooves (S2/S1) is less than 0.80, wherein the total cis content in BR is, when two or more BRs are used, the value obtained by multiplying the cis content of each BR by the mass fraction in the total amount of BR, and summing these values, wherein the tan $\delta$ at 70°C is a loss tangent tan $\delta$ under a condition of a temperature at 70°C, an initial strain of 10%, a dynamic strain of $\pm$ 2%, and a frequency of 10 Hz, and wherein the N2SA of silica is a value measured by a BET method according to ASTM D3037-93.

EFFECT OF THE INVENTION

According to the present disclosure, provided is a tire having improved overall performance of fuel efficiency, breaking resistance, and abrasion resistance.

BRIEF DESCRIPTION OF THE DRAWINGS

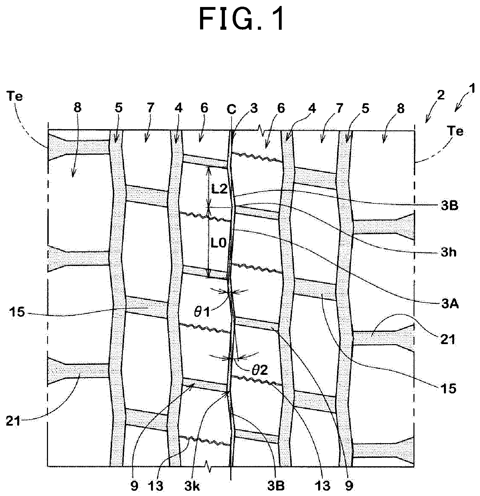

FIG. 1 is a developed view of a tread pattern of a tire according to one embodiment of the present disclosure developed in a plane.

DETAILED DESCRIPTION

The tire according to the present disclosure is a tire comprising a tread, wherein the tread has at least one rubber layer, wherein a cap rubber layer of the tread surface is formed of a rubber composition comprising a rubber component having a total content of 90% by mass or more of an isoprene-based rubber and a butadiene rubber and silica having a nitrogen adsorption specific surface area (N$_2$SA) of 180 m$^2$/g or more, wherein a total cis content in the butadiene rubber is less than 90% by mass, wherein a tan $\delta$ at 70°C of the rubber composition of the cap rubber layer is less than 0.15, wherein the tread has circumferential grooves extending continuously in a tire circumferential direction and lateral grooves extending in a tire width direction, and wherein a ratio of a total area S2 of the lateral grooves to a total area S1 of the circumferential grooves (S2/S1) is less than 0.80. The total cis content in BR is, when two or more BRs are used, the value obtained by multiplying the cis content of each BR by the mass fraction in the total amount of BR, and summing these values. The tan δ at 70°C is a loss tangent tan δ under a condition of a temperature at 70°C, an initial strain of 10%, a dynamic strain of ± 2%, and a frequency of 10 Hz. The N2SA of silica is a value measured by a BET method according to ASTM D3037-93. Although it not intended to be bound by theory, for example, the following can be considered as a mechanism in which effects of the present disclosure are exhibited.

By setting a nitrogen adsorption specific surface areas (N₂SA) of the rubber component and silica to be compounded in the cap rubber layer in a predetermined combination, silica can be finely dispersed to a high degree, a strong silica network is formed, and it becomes possible to achieve a balance of strength at elongation and the elongation of the rubber composition at a high level. Moreover, by setting a tan δ at 70°C of the rubber composition of the cap rubber layer within a predetermined range, fuel efficiency can be improved. Furthermore, by setting a ratio of a total area of the lateral grooves to a total area of the circumferential grooves within a predetermined range, it becomes possible to achieve both fuel efficiency and abrasion resistance at a high level. In addition, it is considered that the overall performance of fuel efficiency, breaking resistance, and abrasion resistance can be improved by making the physical properties of the rubber composition of the cap rubber layer to cooperate with a tread pattern.

In the tire of the present disclosure, it is preferable that the tread has a base rubber layer adjacent to inside in a radial direction of the cap rubber layer and that, when a thickness of the cap rubber layer is Tc (mm) and a thickness of the base rubber layer is Tb (mm), Tc and Tb satisfy the following inequality (1),

$$0.10 \leq (Tb)/(Tc + Tb) \leq 0.35 \ (1)$$

In the tire of the present disclosure, it is preferable that the tread has a base rubber layer adjacent to inside in the radial direction of the cap rubber layer and that the tan δ at 70°C of the rubber composition of the base rubber layer is 0.01 to 0.07.

A tire including production of the rubber composition for tread that is one embodiment of the present disclosure will be described in detail below. However, the following descriptions are illustrative for explaining the present disclosure, and are not intended to limit the technical scope of the present disclosure to this description range only. Besides, in the present specification, a numerical range identified with "to" means to include the numerical values of both ends.

[Tire]

The tire according to the present disclosure comprises a tread formed of the rubber composition for tread, which is not particularly limited for its category, and can be used as a tire for a passenger car, a heavy duty tire for a truck or bus, etc., a tire for a two-wheeled vehicle, a run flat tire, a non-pneumatic tire, or the like. Among them, a heavy duty tire is preferably used. Moreover, since the tire according to the present disclosure is good in breaking resistance and abrasion resistance, it is suitable for running on an off road surface (unpaved rough road surface).

FIG. 1 shows an example of a developed view a tread pattern of a tire according to one embodiment of the present disclosure developed in a plane, though the present disclosure is not limited to this. As shown in FIG. 1, a tread 2 of the tire according to the present embodiment has circumferential groove 3, 4, 5 extending continuously in a tire circumferential direction (extending linearly along the tire circumferential direction in the example of FIG. 1), center lateral grooves 9, center sipes 13, middle lateral grooves 15, and shoulder lateral grooves 21 extending in a width direction.

In the tread 2, a ratio of a total area S2 of the lateral grooves to a total area S1 of the circumferential grooves (S2/S1) is less than 0.80, preferably 0.75 or less, more preferably 0.70 or less, further preferably 0.65 or less, particularly preferably 0.60 or less. By setting S2/S1 to be less than 0.80, it becomes possible to achieve both breaking resistance and abrasion resistance at a high level. Moreover, a lower limit value of the S2/S1 is, but not particularly limited to, preferably 0.05 or more, more preferably 0.10 or more, further preferably 0.15 or more, particularly preferably 0.18 or more, from the viewpoint of maintaining rigidity of a tread part to enhance breaking resistance and abrasion resistance. Besides, in the present disclosure, a total area S1 of the circumferential grooves and a total area S2 of the lateral grooves are calculated, in a normal state with no load applied where a tire is rim-assembled to a normal rim and a normal internal pressure is filled, from a grounding shape of a tread surface when a normal load is applied to press the tread against a flat surface. The grounding shape can be obtained by mounting a tire on a normal rim and holding a normal internal pressure, and then applying an ink to, for example, the tread 2, applying a normal load to press the tread part 2 vertically against cardboard or the like (camper angle at 0°), and transferring the ink applied to the tread 2.

Besides, in the present disclosure, the "lateral grooves" are grooves or sipes that cross center land parts 6, middle land parts 7, or shoulder land parts 8 partitioned by the circumferential grooves 3, 4, and 5 and refer to ones in which a straight line connecting both ends in a width direction is inclined at an angle of 0 to 30° with respect to a tire width direction. The grooves and sipes may or may not have their ends communicating with the circumferential grooves. Here, the "groove" refers to a recess having a width larger than at least 2.0 mm, and the "sipe" refers to a narrow notch having a width of 2.0 mm or less (preferably 0.5 to 2.0 mm).

The "normal rim" is a rim defined for each tire by the standard in a standard system on which standard the tire is based. For example, it is a "standard rim" in JATMA, "Design Rim" in TRA, or "Measuring Rim" in ETRTO.

The "normal internal pressure" is an air pressure defined for each tire by the standards, i.e., a "maximum air pressure" in JATMA, a maximum value described in Table "TIRE LOAD LIMITS AT VARIOUS COLD INFLATION PRESSURES" in TRA, or "INFLATION PRESSURE" in ETRTO.

The "normal load" is a load defined for each tire by the standard, i.e., a maximum load capacity in JATMA, a maximum value described in Table "TIRE LOAD LIMITS AT VARIOUS COLD INFLATION PRESSURES" in TRA, or "LOAD CAPACITY" in ETRTO.

In FIG. 1, the tread part 2 is provided with circumferential grooves extending continuously in a tire circumferential direction. The circumferential grooves of the present disclosure include one center circumferential groove 3 provided on a tire equator C, middle circumferential grooves 4, 4 arranged on both sides of the center circumferential groove 3, respectively, and a pair of shoulder circumferential grooves 5, 5 arranged between each of the middle circumferential grooves 4, 4 and a tread end Te on an outer side in a tire axial direction. Besides, the number of circumferential grooves is not particularly limited, and may be, for example, 1 to 4. Moreover, the circumferential grooves 3, 4, and 5 extend in a zigzag shape, but are not limited to such an aspect, and may extend in, for example, a linear or a wavy shape.

The "tread end" Te is defined as a grounding position on an outer side in a tire axial direction when a tire, in a normal state with no load applied where the tire is rim-assembled on a normal rim and filled with a normal internal pressure, is applied with a normal load and is grounded with a flat surface at a camber angle of 0 degree.

In FIG. 1, the center circumferential groove 3 extends in a zigzag shape. The center circumferential groove 3 of the present disclosure alternately includes a center long side part 3A and a center short side part 3B. The center long side part 3A is inclined to one side with respect to a tire circumferential direction. The center short side part 3B is inclined in an opposite direction to the center long side part 3A. Such a center circumferential groove 3 can effectively collect water films between tread surfaces of land parts on both sides of the center circumferential groove 3, thereby improving drainage performance. Moreover, since the center short side part 3B has a large angle θ2 with respect to the tire circumferential direction, a force acts in a direction closing the center short side part 3B during straight running, so that deformation in the tire circumferential direction of the land part near the center short side part 3B is suppressed, and slippage on the road surface becomes reduced, which suppresses heel-and-toe wear.

The center circumferential groove 3 has a zigzag top 3h that becomes convex toward one side in a tire axial direction at an intersection of the center long side part 3A and the center short side part 3B (right side in FIG. 1) and a zigzag top 3k that becomes convex toward the other side in the tire axial direction at the intersection of the center long side part 3A and the center short side part 3B (left side in FIG. 1).

An angle θ1 of the center long side part 3A with respect to the tire circumferential direction is preferably 0.5 to 6.5 degrees. An angle θ2 of the center short side part 3B with respect to the tire circumferential direction is preferably 5 to 15 degrees. Within such a range, drainage performance can be secured, and a decrease in rigidity of the land parts can be suppressed.

A ratio L0/L2 of a length L0 of the center long side part 3A in the tire circumferential direction to a length L2 of the center short side part 3B in the tire circumferential direction is preferably 1.3 to 2.3, from the viewpoints of increasing the rigidity of the land parts on both sides of the center circumferential groove 3 and reducing the slippage of the land parts on both sides of the center circumferential groove 3 with respect to the road surface.

With such each circumferential groove 3 to 5, the tread part 2 is provided with a pair of center land parts 6, 6, middle land parts 7, 7, and shoulder land parts 8, 8. The center land part 6 is formed between the center circumferential groove 3 and the middle circumferential groove 4. The middle land part 7 is formed between the middle circumferential groove 4 and the shoulder circumferential groove 5. The shoulder land part 8 is formed between the shoulder circumferential groove 5 and the tread end Te.

The center land part 6 is provided with an open type center sipe 13 that connects between the center circumferential groove 3 and the middle circumferential groove 4. Since such sipe deforms in a direction closing a width at the time of grounding of a block edge in the tire circumferential direction of the center land part 6, adjacent wall surfaces of the sipe closely adhere to each other for supporting each other, thereby suppressing a decrease in rigidity of the land part. Therefore, the center sipe 13 enhances drainage performance and uneven abrasion resistance with a good balance in a center block 11 on which a high grounding pressure acts and which is difficult to be drained. The center sipe 13 extends in a zigzag shape, but is not limited to such an aspect, and may extend in, for example, a wavy, sinusoidal, or linear shape.

The center land part 6 is provided with a plurality of center lateral grooves 9 in the tire circumferential direction. The center lateral groove 9 extends in a linear shape, but is not limited to such an aspect, and may extend in, for example, a wavy, sinusoidal, or zigzag shape.

The middle land part 7 is provided with a plurality of middle lateral grooves 15 in the tire circumferential direction. The middle lateral groove 15 extends in a linear shape, but is not limited to such an aspect, and may extend in, for example, a wavy, sinusoidal, or zigzag shape.

The shoulder land part 8 is provided with a plurality of shoulder lateral grooves 21 in the tire circumferential direction. The shoulder lateral groove 21 extends in a linear shape, but is not limited to such an aspect, and may extend in, for example, a wavy, sinusoidal, or zigzag shape.

The tread part 2 may be formed of a single rubber layer, or may have a base rubber layer which is adjacent to an inner side in a tire radial direction of a rubber layer of a tread surface (cap rubber layer). Furthermore, as long as effects of the present disclosure are achieved, one or more rubber layers may be further provided between the base rubber layer and a belt layer.

In the tire of the present disclosure, it is preferable that, when a thickness of the cap rubber layer is Tc (mm) and a thickness of the base rubber layer is Tb (mm), Tc and Tb satisfy the following inequality (1). Besides, in the present disclosure, the thickness of the cap rubber layer Tc and the thickness of the base rubber layer Tb are both measured in a normal state.

$$0.10 \leq (Tb)/(Tc + Tb) \leq 0.35 \ (1)$$

By setting (Tb)/(Tc + Tb) to be 0.10 or more, fuel efficiency can be further improved. Moreover, by setting (Tb)/(Tc + Tb) to be 0.35 or less, abrasion resistance can be further improved. (Tb)/(Tc + Tb) is more preferably 0.12 to 0.33, further preferably 0.15 to 0.32.

The "70°C tan $\delta$" in the present disclosure refers to a loss tangent tan $\delta$ under a condition of a temperature at 70°C, an initial strain of 10%, a dynamic strain of $\pm$ 2%, and a frequency of 10 Hz.

The 70°C tan $\delta$ of the rubber composition of the cap rubber layer is less than 0.15, preferably 0.12 or less, more preferably 0.09 or less, further preferably 0.08 or less, particularly preferably 0.07 or less. By setting the 70°C tan $\delta$ of the rubber composition of the cap rubber layer to be less than 0.15, fuel efficiency can be improved. On the other hand, the 70°C tan $\delta$ of the rubber composition of the cap rubber layer is preferably 0.03 or more, more preferably 0.04 or more, further preferably 0.05 or more, particularly preferably 0.06 or more, from the viewpoint of wet grip performance.

The 70°C tan $\delta$ of the rubber composition of the base rubber layer is preferably 0.01 or more, more preferably 0.04 or more, further preferably 0.05 or more. When the 70°C tan $\delta$ of the rubber composition of the base rubber layer is less than 0.01, breaking strength in compounding itself of the base rubber is remarkably lowered, and there is a concern that tears may occur due to the breaking of the base rubber itself. On the other hand, the 70°C tan $\delta$ of the rubber composition of the base rubber layer is preferably 0.07 or less, more preferably 0.06 or less, from the viewpoints of suppressing a temperature rise at the belt end and suppressing breaking that starts from a steel filament end.

Besides, the 70°C tan $\delta$ of each rubber layer can be appropriately adjusted depending on types and compounding amounts of a rubber component, a filler, a silane coupling agent, oil, a glycerin fatty acid ester, and the like which will be described later.

The "breaking energy" in the present disclosure is calculated by the following equation with measurement of a strength at break TB (MPa) and an elongation at break EB (%) of a No. 3 dumbbell type test piece formed of each test vulcanized rubber composition n an atmosphere of 23°C in accordance with JIS K 6251: 2017.

$$(\text{Breaking energy}) = (\text{TB} \times \text{EB})/2$$

The breaking energy of the rubber composition of the cap rubber layer is preferably 5000 or more, more preferably 5500 or more, further preferably 6000 or more, particularly preferably 6500 or more. By setting the breaking energy within the above-described ranges, it is considered that reinforcing property of the rubber can be ensured and breaking resistance and abrasion resistance are improved. On the other hand, an upper limit value of the breaking energy of the rubber composition of the cap rubber layer is not particularly limited.

[Rubber composition]

The tire of the present disclosure can improve an overall performance of fuel efficiency, breaking resistance, and abrasion resistance by making the above-mentioned tread pattern to cooperate with the above-described physical properties of the rubber composition of each layer of the tread.

<Rubber component>

The rubber composition of each rubber layer of the tread (the rubber composition for tread) according to the present disclosure preferably comprises at least one selected from the group consisting of an isoprene-based rubber, a styrene-butadiene rubber (SBR), and a butadiene rubber (BR) as rubber components. The rubber component of the cap rubber layer comprises an isoprene-based rubber and a BR, and may be a rubber component consisting only of an isoprene-based rubber and a BR. The rubber component of the base rubber layer preferably comprises an isoprene-based rubber, and may be a rubber component consisting only of an isoprene-based rubber.

(Isoprene-based rubber)

As an isoprene-based rubber, for example, those common in the tire industry can be used, such as an isoprene rubber (IR) and a natural rubber. Examples of the natural rubber includes a non-modified natural rubber (NR), as well as a modified natural rubber such as an epoxidized natural rubber (ENR), a hydrogenated natural rubber (HNR), a deproteinized natural rubber (DPNR), an ultra pure natural rubber (UPNR), and a grafted natural rubber, and the like. These isoprene-based rubbers may be used alone, or two or more thereof may be used in combination.

The NR is not particularly limited, and those common in the tire industry can be used, examples of which include, for example, SIR20, RSS#3, TSR20, and the like.

In the rubber composition of the cap rubber layer, a content of the isoprene-based rubber in the rubber component is preferably 50% by mass or more, more preferably 55% by mass or more, further preferably 60% by mass or more, particularly preferably 65% by mass or more. Since silica has a good affinity with an isoprene-based rubber, strength of the entire matrix is improved by increasing the content of the isoprene-based rubber in the rubber component and dispersing silica in an isoprene-based rubber phase which becomes a sea phase, and therefore abrasion resistance and fracture characteristics tend to be further improved. On the other hand, it is preferably 95% by mass or less, more preferably 90% by mass or less, further preferably 85% by mass or less, further preferably 80% by mass or less, particularly preferably 75% by mass or less, from the viewpoint of wet grip performance.

In the rubber composition of the base rubber layer, a content of the isoprene-based rubber in the rubber component is preferably 85% by mass or more, more preferably 90% by mass or more, further preferably 95% by mass or more, and the rubber component may consist only of an isoprene-based rubber.

(BR)

A BR is not particularly limited, and those common in the tire industry can be used such as, for example, a BR having a cis content (cis-1,4 bond content) of 90% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR).

Examples of the high cis BR include, for example, those manufactured by Zeon Corporation, those manufactured by Ube Industries, Ltd., those manufactured by JSR Corporation, and the like. When the high cis BR is compounded, low temperature characteristics and abrasion resistance can be improved. A cis content of the high cis BR is preferably 90% by mass or more, more preferably 95% or more, further preferably 96% or more, particularly preferably 97% or more.

Besides, in the present specification, the cis content in each rubber component is a value calculated by infrared absorption spectrometry according to JIS K 6239-2: 2017.

As a rare-earth-based BR, those which are synthesized using a rare-earth element-based catalyst, have a vinyl bond content (1,2-bond butadiene unit amount) of preferably 1.8 mol% or less, more preferably 1.0 mol% or less, further preferably 0.8% mol or less, and a cis content (cis-1,4 bond content) of preferably 95 mol% or more, more preferably 96 mol% or more, further preferably 97 mol% or more, can be used. As the rare-earth-based BR, for example, those manufactured by LANXESS and the like can be used.

Examples of the SPB-containing BR include those in which 1,2-syndiotactic polybutadiene crystal is chemically bonded with BR and dispersed, but not those in which the crystal is simply dispersed in the BR. As such SPB-containing BR, those manufactured by Ube Industries, Ltd. and the like can be used.

As a modified BR, a terminal-modified BR coupled with tin and a terminal-modified BR having an alkoxysilyl group and/or an amino group are appropriately used. Moreover, the modified BR may be either non-hydrogenated or hydrogenated. As such modified BR, those manufactured by Zeon Corporation, those manufactured by Asahi Kasei Chemicals Co., Ltd., and the like can be used.

As the modified BR coupled with tin, those obtained by adding a tin compound after polymerizing 1,3-butadiene by a lithium initiator, and further in which the end of the modified BR molecule is bonded by tin-carbon bond are preferable. Examples of the lithium initiator include lithium-based compounds such as alkyllithium, aryllithium, vinyllithium, organic tin lithium, and organic nitrogen lithium compounds, lithium metals, and the like. By using the above-described lithium initiator as an initiator for a modified BR, a modified BR having a high vinyl content and a low cis content can be produced. Examples of the tin compound include tin tetrachloride, butyltin trichloride, dibutyltin dichloride, dioctyltin dichloride, tributyltin chloride, triphenyltin chloride, diphenyldibutyltin, triphenyltin ethoxide, diphenyldimethyltin, ditolyltin chloride, diphenyltin dioctanoate, divinyldiethyltin, tetrabenzyltin, dibutyltin distearate, tetraallyltin, p-tributyltin styrene, and the like, which may be used alone, or two or more thereof may be used in combination.

A cis content of the modified BR is preferably 50% by mass or less, more preferably 45% by mass or less, further preferably 40% by mass or less. Moreover, the cis content of the modified BR is preferably 20% by mass or more, more preferably 30% by mass or more.

The BRs listed above may be used alone, or two or more thereof may be used in combination.

A weight-average molecular weight (Mw) of the BR is preferably 300,000 or more, more preferably 350,000 or more, further preferably 400,000 or more, from the viewpoints of abrasion resistance and grip performance, etc. Moreover, it is preferably 2,000,000 or less, more preferably 1,000,000 or less, from the viewpoints of cross-linking uniformity, etc. Besides, the Mw can be calculated in terms of a standard polystyrene based on measurement values obtained by a gel permeation chromatography (GPC) (GPC-8000 Series manufactured by Tosoh Corporation, detector: differential refractometer, column: TSKGEL SUPERMULTIPORE HZ-M manufactured by Tosoh Corporation).

In the rubber composition of the cap rubber layer, a content of the BR in the rubber component is preferably 5% by mass or more, more preferably 10% by mass or more, further preferably 15% by mass or more, further preferably 20% by mass or more, particularly preferably 25% by mass or more, from the viewpoint of abrasion resistance. Moreover, it is preferably 60% by mass or less, more preferably 55% by mass or less, further preferably 50% by mass or less, further preferably 45% by mass or less, further preferably 40% by mass or less, particularly preferably 35% by mass or less, from the viewpoint of wet grip performance. Besides, in the rubber composition of the base rubber layer, the content of the BR in the rubber component is not particularly limited.

A total cis content in the BR is less than 90% by mass, preferably 89% by mass or less, more preferably 86% by mass or less, further preferably 84% by mass or less, further preferably 82% by mass or less, particularly preferably 80% by mass or less, from the viewpoints of breaking resistance and abrasion resistance. On the other hand, the total cis content in the BR is preferably 30% by mass or more, more preferably 40% by mass or more, further preferably 45% by mass or more, further preferably 50% by mass or more, further preferably 55% by mass or more, further preferably 60% by mass or more, particularly preferably 65% by mass or more, from the viewpoints of breaking resistance and abrasion resistance. Besides, in the present disclosure, the total cis content in BR is, when two or more BRs are used, the value obtained by multiplying the cis content of each BR by the mass fraction in the total amount of BR, and summing these values. For example, when the rubber component is composed of 40% by mass of first BR (cis content: 97% by mass), 10% by mass of second BR (cis content: 42% by mass), and 50% by mass of NR, the total cis content in BR is 86% by mass (= $97 \times 40/50 + 42 \times 10/50$).

A total cis content in a total amount of rubber component is preferably 95% by mass or less, more preferably 94% by mass or less, further preferably 93% by mass or less, further preferably 92% by mass or less, further preferably 91% by mass or less, particularly preferably 90% by mass or less from the viewpoint of fuel efficiency. On the other hand, the total cis content in the total amount of rubber component is preferably 60% by mass or more, more preferably 70% by mass or more, further preferably 75% by mass or more, further preferably 80% by mass or more, further preferably 83% by mass or more, particularly preferably 85% by mass or more, from the viewpoints of breaking resistance and abrasion resistance. Besides, in the present disclosure, the total cis content in the total amount of the rubber component is a value obtained by multiplying the cis content of each rubber component by the mass fraction in the total amount of the rubber component, and summing these values. Specifically, it is calculated by $\Sigma$ (total cis content in each rubber component $\times$ content of each rubber component in the total amount of rubber component/100). For example, the rubber component is composed of 40% by mass of first BR (cis content: 97% by mass), 10% by mass of second BR (cis content: 42% by mass), and 50% by mass of NR (cis content: 100% by mass), the total cis content in the total amount of the rubber component is 93% by mass (= $97 \times 40/100 + 42 \times 10/100 + 100 \times 50/100$). Here, since NR and BR are composed of only the diene unit, the total cis content in each rubber component is the same value as cis content of NR and BR. Further, since SBR contains a constituent unit other than the diene unit, the total cis content in each rubber component is calculated by the following formula.

(Total cis content in each rubber component) = (1 - styrene content) $\times$ (cis-1,4-bonded butadiene unit amount of SBR)/ 100

In the rubber composition of the cap rubber layer, a content of a modified BR when compounded in the rubber component is preferably 5% by mass or more, more preferably 10% by mass or more, further preferably 15% by mass or more, particularly preferably 20% by mass or more, from the viewpoint of abrasion resistance. Moreover, it is preferably 60% by mass or less, more preferably 55% by mass or less, further preferably 50% by mass or less, further preferably 45% by mass or less, further preferably 40% by mass or less, particularly preferably 35% by mass or less, from the viewpoint of wet grip performance.

(SBR)

The SBR is not particularly limited, examples of which include a solution-polymerized SBR (S-SBR), an emulsion-polymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Among them, an E-SBR is preferable from the viewpoint that it can well improve fuel efficiency and abrasion resistance. These SBRs may be used alone, or two or more thereof may be used in combination.

(Other rubber components)

As the rubber components according to the present disclosure, rubber components other than the above-described isoprene-based rubbers, SBRs, and BRs may be compounded. As other rubber components, cross-linkable rubber components commonly used in the tire industry can be used. Examples of other rubber components include, for example, diene-based rubbers other than isoprene-based rubber, SBR, and BR such as a styrene-isoprene rubber (SIR), a styrene-isoprene-butadiene rubber (SIBR), a chloroprene rubber (CR), and an acrylonitrile-butadiene rubber (NBR); rubber components other than diene-based rubber such as a butyl rubber (IIR), a halogenated butyl rubber, an ethylene propylene rubber, a polynorbornene rubber, a silicone rubber, a polyethylene chloride rubber, a fluororubber (FKM), an acrylic rubber (ACM), and a hydrin rubber. These other rubber components may be used alone, or two or more thereof may be used in combination. In the rubber component according to the present disclosure, a content of diene-based rubber in the rubber component is preferably 80% by mass or more, more preferably 90% by mass or more, further preferably 95% by mass or more, particularly preferably 98% by mass or more. The rubber component may be a rubber component consisting only of a diene-based rubber. Further, in addition to the above rubber component, a known thermoplastic elastomer may or may not be contained.

< Filler>

The rubber composition for tread according to the present disclosure preferably comprises a filler comprising carbon black and/or silica. Moreover, the filler may be a filler consisting only of carbon black and silica. The rubber composition of the cap rubber layer preferably comprises silica as a filler, more preferably comprises carbon black and silica, and may comprise a filler consisting only of carbon black and silica. The rubber composition of the base rubber layer preferably comprises carbon black as a filler, more preferably comprises carbon black and silica, and may comprise a filler consisting only of carbon black and silica.

(Silica)

By compounding silica in the rubber composition for tread according to the present disclosure, fuel efficiency, breaking resistance, and abrasion resistance can be improved. Silica is not particularly limited, and those common in the tire industry can be used, such as, for example, silica prepared by a dry process (anhydrous silica) and silica prepared by a wet process (hydrous silica). Among them, hydrous silica prepared by a wet process is preferable from the reason that it has many silanol groups. These silica may be used alone, or two or more thereof may be used in combination.

A nitrogen adsorption specific surface area ($N_2SA$) of silica is 180 $m^2/g$ or more, preferably 185 $m^2/g$ or more, more preferably 190 $m^2/g$ or more, further preferably 200 $m^2/g$ or more, from the viewpoints of breaking resistance and abrasion resistance. Moreover, it is preferably 350 $m^2/g$ or less, more preferably 300 $m^2/g$ or less, further preferably 250 $m^2/g$ or less, from the viewpoints of fuel efficiency and processability. Besides, the $N_2SA$ of silica in the present specification is a value measured by a BET method according to ASTM D3037-93.

In the rubber composition of the cap rubber layer, a content of silica based on 100 parts by mass of the rubber component is preferably 20 parts by mass or more, more preferably 25 parts by mass or more, further preferably 30 parts by mass or more. Moreover, it is preferably 150 parts by mass or less, more preferably 130 parts by mass or less, further preferably 110 parts by mass or less, particularly preferably 90 parts by mass or less, from the viewpoint of suppressing deterioration of fuel efficiency and abrasion resistance due to deterioration of silica dispersibility in a rubber.

In the rubber composition of the base rubber layer, a content of silica based on 100 parts by mass of the rubber component is preferably 60 parts by mass or less, more preferably 50 parts by mass or less, further preferably 40 parts by mass, particularly preferably 30 parts by mass or less, from the viewpoints of fuel efficiency and abrasion resistance. On the other hand, in the rubber composition of the base rubber layer, the content of silica can be, but not particularly limited to, for example, 1 part by mass or more, 3 parts by mass or more, or 5 parts by mass or more, based on 100 parts by mass of the rubber component, and the rubber composition may not comprise silica.

(Carbon black)

Carbon black is not particularly limited, and, for example, those commonly used in the tire industry such as GPF, FEF, HAF, ISAF, and SAF can be used. These carbon black may be used alone, or two or more thereof may be used in combination.

A nitrogen adsorption specific surface area ($N_2SA$) of carbon black is preferably 50 m$^2$/g or more, more preferably 80 m$^2$/g or more, further preferably 100 m$^2$/g or more, from the viewpoints of weather resistance and reinforcing property. Moreover, it is preferably 250 m$^2$/g or less, more preferably 220 m$^2$/g or less, from the viewpoints of dispersibility, fuel efficiency, fracture characteristics, and durability. Besides, the $N_2SA$ of carbon black in the present specification is a value measured according to JIS K 6217-2: "Carbon black for rubber industry-Fundamental characteristics-Part 2: Determination of specific surface area-Nitrogen adsorption methods-Single-point procedures" A Method.

In the rubber composition of the cap rubber layer, a content of carbon black based on 100 parts by mass of the rubber component is preferably 1 part by mass or more, more preferably 3 parts by mass or more, further preferably 5 parts by mass or more, particularly preferably 10 parts by mass or more, from the viewpoints of weather resistance and reinforcing property. Moreover, it is preferably 60 parts by mass or less, more preferably 50 parts by mass or less, further preferably 40 parts by mass or less, particularly preferably 30 parts by mass or less, from the viewpoint of fuel efficiency.

In the rubber composition of the base rubber layer, a content of carbon black based on 100 parts by mass of the rubber component is preferably 5 parts by mass or more, more preferably 15 parts by mass or more, further preferably 25 parts by mass or more, from the viewpoint of reinforcing property. Moreover, it is preferably 60 parts by mass or less, more preferably 50 parts by mass or less, further preferably 40 parts by mass or less, from the viewpoint of fuel efficiency.

As fillers other than silica and carbon black, those commonly used in the tire industry such as, for example, aluminum hydroxide, calcium carbonate, alumina, clay, and talc, can be used.

In the rubber composition of the cap rubber layer, a content of silica in a total of 100% by mass of silica and carbon black is preferably 30% by mass or more, more preferably 40% by mass or more, further 45% by mass or more, particularly preferably 50% by mass or more. Moreover, the content of silica is preferably 99% by mass or less, more preferably 95% by mass or less, further preferably 90% by mass or less.

In the rubber composition of the base rubber layer, a content of silica in the total 100% by mass of silica and carbon black is preferably 5% by mass or more, more preferably 10% by mass or more. Moreover, the content of silica is preferably 30% by mass or less, more preferably 25% by mass or less.

In the rubber composition of the cap rubber layer, a total content of silica and carbon black based on 100 parts by mass of the rubber component is preferably 40 parts by mass or more, more preferably 50 parts by mass or more, further preferably 55 parts by mass or more, from the viewpoint of abrasion resistance. Moreover, it is preferably 180 parts by mass or less, more preferably 160 parts by mass or less, further preferably 140 parts by mass or less, particularly preferably 120 parts by mass or less, from the viewpoint of suppressing deterioration of fuel efficiency and abrasion resistance.

In the rubber composition of the base rubber layer, a total content of silica and carbon black based on 100 parts by mass of the rubber component is preferably 20 parts by mass or more, more preferably 30 parts by mass or more, further preferably 40 parts by mass or more. Moreover, the content is preferably 70 parts by mass or less, more preferably 60 parts by mass or less, further preferably 50 parts by mass or less.

(Silane coupling agent)

Silica is preferably used in combination with a silane coupling agent. Examples of the silane coupling agents include, but not particularly limited to, for example, silane coupling agents having a sulfide group such as bis(3-triethoxysilylpropyl)disulfide and bis(3-triethoxysilylpropyl)tetrasulfide; silane coupling agents having a mercapto group such as 3-mercaptopropyltrimethoxysilane, NXT-Z100, NXT-Z45, and NXT manufactured by Momentive; silane coupling agents having a vinyl group such as vinyltriethoxysilane and vinyltrimethoxysilane; silane coupling agents having an amino group such as 3-aminopropyltriethoxysilane, 3-aminopropyltrimethoxysilane, and 3-(2-aminoethyl)aminopropyltriethoxysilane; glycidoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; chloro-based silane coupling agents such as 3-chloropropyltrimethoxysilane and 3-chloropropyltriethoxy, and the like. Among them, silane coupling agents having a sulfide group are preferable. These silane coupling agents may be used alone, or two or more thereof may be used in combination.

When the rubber composition comprises the silane coupling agent (preferably silane coupling agent having a sulfide group), the content thereof is, from the viewpoint of enhancing dispersibility of silica, preferably 8.0 parts by mass or more, more preferably 8.5 parts by mass or more, further preferably 9.0 parts by mass or more, particularly preferably 9.5 parts by mass or more based on 100 parts by mass of silica. Moreover, it is preferably 18 parts by mass or less, more preferably 16 parts by mass or less, further preferably 14 parts by mass or less, particularly preferably 12 parts by mass or less, from the viewpoint of preventing deterioration of abrasion resistance.

(Other compounding agents)

The rubber composition for tread according to the present disclosure can appropriately comprise compounding agents commonly used in the conventional tire industry, such as, for example, oil, wax, a glycerin fatty acid ester, processing aid, an antioxidant, stearic acid, zinc oxide, a vulcanizing agent such as sulfur, and a vulcanization accelerator, in addition to the above-described components.

Examples of oil include, for example, process oil, vegetable fats and oils, animal fats and oils, and the like. Examples of the process oil include a paraffin-based process oil, a naphthene-based process oil, an aroma-based process oil, and the like. In addition, as an environmental measure, process oil having a low content of a polycyclic aromatic (PCA) compound can also be used. Examples of the low PCA content process oil include a mild extraction solution (MES), a treated distillate aromatic extract (TDAE), a heavy naphthenic oil, and the like.

When the rubber composition comprises the oil, the content thereof is, from the viewpoint of processability, preferably 1 part by mass or more, more preferably 5 parts by mass or more, further preferably 10 parts by mass or more based on 100 parts by mass of the rubber component. Moreover, it is preferably 80 parts by mass or less, more preferably 70 parts by mass or less, further preferably 60 parts by mass or less, from the viewpoint of abrasion resistance. Besides, in the present specification, the content of oil also includes an amount of oil contained in an oil-extended rubber.

When the rubber composition comprises wax, the content thereof is, from the viewpoint of weather resistance of a rubber, preferably 0.5 parts by mass or more, more preferably 1.0 part by mass or more, further preferably 1.5 parts by mass or more based on 100 parts by mass of the rubber component. Moreover, it is preferably 8.0 parts by mass or less, more preferably 6.0 parts by mass or less, from the viewpoint of preventing whitening of a tire due to bloom.

The glycerin fatty acid ester is one in which a fatty acid is ester-bonded to at least one of three OH groups of glycerin, and is referred to as a glycerin fatty acid monoester, a glycerin fatty acid diester, or a glycerin fatty acid triester depending on the number of fatty acids attached thereto. The fatty acid of the glycerin fatty acid ester is preferably a fatty acid having 8 to 28 carbon atoms, more preferably 8 to 22 carbon atoms, further preferably 10 to 18 carbon atoms, particularly preferably 12 to 18 carbon atoms. Moreover, the fatty acid may be saturated, unsaturated, linear, or branched, but a linear saturated fatty acid is preferable. Specific examples of the fatty acid include capric acid, lauric acid, myristic acid, palmitic acid, stearic acid, isostearic acid, oleic acid, linoleic acid, and the like.

When the rubber composition comprises the glycerin fatty acid ester, the content thereof is, but not particularly limited to, preferably 0.1 parts by mass or more, more preferably 0.5 parts by mass or more, further preferably 1.0 part by mass or more based on 100 parts by mass of the rubber component. Moreover, the content is preferably 10.0 parts by mass or less, more preferably 8.0 parts by mass or less, further preferably 6.0 parts by mass or less. When the content of the glycerin fatty acid ester is within the above-described ranges, dispersibility of a filler in the rubber composition can be improved, and fuel efficiency and abrasion resistance can be further improved.

Examples of processing aid include, for example, a fatty acid metal salt, a fatty acid amide, an amide ester, a silica surface active agent, a fatty acid ester, a mixture of a fatty acid metal salt and an amide ester, a mixture of a fatty acid metal salt and a fatty acid amide, and the like. These processing aid may be used alone, or two or more thereof may be used in combination. As processing aid, for example, those commercially available from Schill+Seilacher GmbH, Performance Additives, etc. can be used.

When the rubber composition comprises the processing aid, the content thereof is, from the viewpoint of exhibiting an effect of improving processability, preferably 0.5 parts by mass or more, more preferably 1 part by mass or more based on 100 parts by mass of the rubber component. Moreover, it is preferably 10 parts by mass or less, more preferably 8 parts by mass or less, from the viewpoints of abrasion resistance and breaking strength.

Examples of the antioxidant include, but not particularly limited to, for example, amine-based, quinoline-based, quinone-based, phenol-based, and imidazole-based compounds, and antioxidants such as a carbamic acid metal salt, preferably, phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, and quinoline-based antioxidants such as 2,2,4-trimethyl-1,2-dihydroquinoline polymer and 6-ethoxy-2,2,4-trimethyl-1,2-dihydroquinoline. These antioxidants may be used alone, or two or more thereof may be used in combination.

When the rubber composition comprises the antioxidant, the content thereof is, from the viewpoint of ozone crack resistance of a rubber, preferably 0.5 parts by mass or more, more preferably 1.0 part by mass or more, further preferably 1.5 parts by mass or more based on 100 parts by mass of the rubber component. Moreover, it is preferably 10.0 parts by mass or less, more preferably 5.0 parts by mass or less, from the viewpoints of abrasion resistance and wet grip performance.

When the rubber composition comprises stearic acid, the content thereof is, from the viewpoint of processability, preferably 0.5 parts by mass or more, more preferably 1 part by mass or more based on 100 parts by mass of the rubber component. Moreover, it is preferably 10 parts by mass or less, more preferably 5 parts by mass or less, from the viewpoint of vulcanization rate.

When the rubber composition comprises zinc oxide, the content thereof is, from the viewpoint of processability, preferably 0.5 parts by mass or more, more preferably 1.0 part by mass or more, further preferably 1.5 parts by mass or more based on 100 parts by mass of the rubber component. Moreover, it is preferably 10.0 parts by mass or less, more preferably 5.0 parts by mass or less, from the viewpoint of abrasion resistance.

Sulfur is appropriately used as a vulcanizing agent. As sulfur, powdery sulfur, oil processing sulfur, precipitated sulfur, colloidal sulfur, insoluble sulfur, highly dispersible sulfur, and the like can be used.

When the rubber composition comprises the sulfur as a vulcanizing agent, the content thereof is, from the viewpoints of securing a sufficient vulcanization reaction and obtaining good grip performance and abrasion resistance, preferably 0.5 parts by mass or more, more preferably 1.0 part by mass or more based on 100 parts by mass of the rubber component. Moreover, it is preferably 3.0 parts by mass or less, more preferably 2.5 parts by mass or less, further preferably 2.0 parts by mass or less, from the viewpoint of deterioration. Besides, a content of the vulcanizing agent when an oil-containing sulfur is used as the vulcanizing agent shall be a total content of pure sulfur comprised in the oil-containing sulfur.

Examples of vulcanizing agents other than sulfur include, for example, alkylphenol/sulfur chloride condensate, sodium hexamethylene-1,6-bisthiosulfate dihydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used.

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, and xantate-based vulcanization accelerators, and the like. These vulcanization accelerators may be used alone, or two or more thereof may be used in combination. Among them, one or more vulcanization accelerators selected from the group consisting of sulfenamide-based, guanidine-based, and thiazole-based vulcanization accelerators are preferable.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like. Among them, N-tert-butyl-2-benzothiazolylsulfenamide (TBBS) is preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like. Among them, 1,3-diphenylguanidine (DPG) is preferable.

Examples of the thiazole-based vulcanization accelerator include, for example, 2-mercaptobenzothiazole, cyclohexylamine salt of 2-mercaptobenzothiazole, di-2-benzothiazolyl disulfide, and the like. Among them, 2-mercaptobenzothiazole is preferable.

When the rubber composition comprises the vulcanization accelerator, the content thereof is preferably 1 part by mass or more, more preferably 2 parts by mass or more based on 100 parts by mass of the rubber component. Moreover, the content of the vulcanization accelerator based on 100 parts by mass of the rubber component is preferably 8 parts by mass or less, more preferably 7 parts by mass or less, further preferably 6 parts by mass or less. When the content of the vulcanization accelerator is within the above-described ranges, breaking strength and elongation tend to be secured.

The rubber composition according to the present disclosure can be produced by a known method. For example, it can be produced by kneading each of the above-described components using a rubber kneading apparatus such as an open roll and a closed type kneader (Bunbury mixer, kneader, etc.).

The kneading step includes, for example, a base kneading step of kneading compounding agents and additives other than vulcanizing agents and vulcanization accelerators and a final kneading (F kneading) step of adding vulcanizing agents and vulcanization accelerators to the kneaded product obtained by the base kneading step and kneading them. Furthermore, the base kneading step can be divided into a plurality of steps, if desired.

Examples of a kneading condition include, but not particularly limited to, for example, in the base kneading step, a method of kneading at a discharge temperature at 150 to 170°C for 3 to 10 minutes, and in the final kneading step, a method of kneading at 70 to 110°C for 1 to 5 minutes. Examples of a vulcanization condition include, but not particularly limited to, for example, a method of vulcanizing at 150 to 200°C for 10 to 30 minutes.

The base kneading step may be divided into a X kneading step of producing a BR master batch comprising a butadiene rubber in a total amount, silica, and a silane coupling agent, and a Y kneading step of adding the remaining rubber components other than vulcanizing agents and vulcanization accelerators, compounding agents, and additives to the above-described master batch to knead them, from the viewpoint of further exhibiting an effect that silica improves characteristics of the rubber composition. Silica and the silane coupling agent may be charged in a total or partial amount in the above-described X kneading step.

The above-described BR masterbatch comprises preferably 10 to 30 parts by mass, more preferably 10 to 20 parts by mass of silica, based on 100 parts by mass of the butadiene rubber. Moreover, it preferably comprises 6 to 15% by mass, more preferably 8 to 12% by mass of a silane coupling agent, based on a compounding amount of silica. A kneading condition for the BR masterbatch is not particularly limited as long as silica is well dispersed, but a kneading method of adjusting the maximum temperature at the time of mixing to be 140 to 160°C is preferable.

A tire comprising a tread comprising a cap rubber layer and a base rubber layer can be produced by a usual method using the above-described rubber composition. That is, the tire can be produced by extruding an unvulcanized rubber composition, obtained by compounding each of the above-described components based on the rubber component as necessary, into a shape of the cap rubber layer and the base rubber layer with an extruder equipped with a mouthpiece having a predetermined shape, attaching it together with other tire members on a tire molding machine, and molding them by a usual method to form an unvulcanized tire, followed by heating and pressurizing this unvulcanized tire in a vulcanizing machine.

EXAMPLE

Hereinafter, the present disclosure will be described based on Examples, though the present disclosure is not limited to these Examples.

Various chemicals used in Examples and Comparative examples are collectively shown below.

NR: TSR20 (cis content: 100% by mass)

BR1: UBEPOL BR150B manufactured by Ube Industries, Ltd. (cis content: 97% by mass, Mw: 440,000)

BR2: BR1250H manufactured by Zeon Corporation (tin-modified BR, polymerized using lithium as an initiator, cis content: 42% by mass, Mw: 570,000)

BR3: N103 manufactured by Asahi Kasei Chemicals Co., Ltd. (modified BR whose terminal is modified with a mixture of tetraglycidyl-1,3-bisaminomethylcyclohexane and its oligomer component, cis content: 36% by mass, Mw: 550,000)

Carbon Black: DIABLACK N220 manufactured by Mitsubishi Chemical Corporation ($N_2SA$: 115 $m^2$/g)

Silica 1: Ultrasil VN3 manufactured by Evonik Degussa GmbH ($N_2SA$: 175 $m^2$/g)

Silica 2: Ultrasil 9100GR manufactured by Evonik Degussa GmbH ($N_2SA$: 230 $m^2$/g)

Silane coupling agent: Si266 manufactured by Evonik Degussa GmbH (bis(3-triethoxysilylpropyl)disulfide)

Wax: OZOACE 0355 manufactured by Nippon Seiro Co., Ltd.

Antioxidant: Nocrac 6C manufactured by Ouchi Shinko Chemical Industry Co., Ltd. (N-(1,3-dimethylbutyl)-N'-phenyl-p-phenylenediamine)

Stearic acid: Bead stearic acid "CAMELLIA" manufactured by NOF CORPORATION

Zinc oxide: Zinc oxide No. 1 manufactured by Mitsui Mining & Smelting Co., Ltd.

Sulfur: HK-200-5 manufactured by Hosoi Chemical Industry Co., Ltd. (5% oil-containing powdered sulfur)

Vulcanization accelerator 1: Nocceler NS manufactured by Ouchi Shinko Chemical Industry Co., Ltd. (N-tert-butyl-2-benzothiazolylsulfenamide (TBBS))

Vulcanization accelerator 2: Nocceler D manufactured by Ouchi Shinko Chemical Industry Co., Ltd. (1,3-diphenylguanidine (DPG))

(Examples and Comparative examples)

According to the compounding formulations shown in Tables 1 and 2, using a 1.7 L closed Banbury mixer, all chemicals other than sulfur and vulcanization accelerators were kneaded until reaching a discharge temperature at 170°C for 5 minutes to obtain a kneaded product. Furthermore, the obtained kneaded product was kneaded again (remilled) with the above-described Banbury mixer at a discharge temperature of 150°C for 4 minutes. Next, using a twin-screw open roll, sulfur and vulcanization accelerators were added to the obtained kneaded product, and the mixture was kneaded for 4 minutes until the temperature reached 105°C to obtain an unvulcanized rubber composition. The obtained unvulcanized rubber composition was press-vulcanized at 170°C for 12 minutes to produce a test vulcanized rubber composition.

Moreover, the above-described unvulcanized rubber composition was extruded into a shape of a tire tread with an extruder equipped with a mouthpiece having a predetermined shape and attached together with other tire members, forming an unvulcanized tire, and the unvulcanized tire was press-vulcanized to produce a test tire (12R22.5, a tire for truck/bus) described in Table 3.

The obtained test vulcanized rubber composition and test tire were evaluated as follows. The evaluation results are shown in Tables 1 to 3.

<Viscoelasticity test>

Vulcanized rubbers were collected from the cap rubber layer and the base rubber layer of each test tire and cut into a width of 4 mm, a length of 40 mm, and a thickness of 2 mm, to measure a loss tangent (tan $\delta$) under a temperature at 70°C, an initial strain of 10%, a dynamic strain of $\pm$ 2%, and a frequency of 10 Hz using a viscoelastic spectrometer manufactured by Iwamoto Seisakusho Co., Ltd. Moreover, an inverse value of 70°C tan $\delta$ of the cap rubber layer was indicated as an index with Comparative example 1 being 100 (a fuel efficiency index). The results show that the larger the index is, the better the fuel efficiency is.

(Fuel efficiency index) = (70°C tan δ of cap rubber layer of Comparative example 1) / (70°C tan δ of cap rubber layer of each test tire) × 100

<Breaking resistance>

A No. 3 dumbbell type test piece formed of each test vulcanized rubber composition was prepared, and a tensile test was conducted in an atmosphere at 23°C in accordance with JIS K 6251: 2017. A strength at break (TB) (MPa) and an elongation at break (EB) (%) were measured to calculate a breaking energy (TB × EB)/2. Moreover, an index by the following equation was indicated with a breaking energy of Comparative example 1 being 100. The results show that the larger the index is, the better the breaking resistance is.

(Breaking resistance index) = (breaking energy of cap rubber layer of each test tire) / (breaking energy of cap rubber layer of Comparative example 1) × 100

<Abrasion resistance>

Each test tire was mounted on all wheels of a truck (2-D vehicle) with a maximum load capacity of 10 tons, and a groove depth of a tire tread part after running 30,000 km on an asphalt-paved road surface was measured to calculate a running distance when the groove depth of the tire was reduced by 1 mm. The results are shown by indexes according to the following equation, as a running distance when the tire groove of Comparative example 1 was reduced by 1 mm being 100. The results show that the larger the index is, the better the abrasion resistance is.

(Abrasion resistance index) = (running distance when a groove of a tire in each compounding example was reduced by 1 mm) / (running distance when a tire groove of Comparative example 1 was reduced by 1 mm) × 100

Besides, for a total performance of fuel efficiency, breaking resistance, and abrasion resistance (an average value of a fuel efficiency index, a breaking resistance index, and an abrasion resistance index), a performance target value shall be 103 or more, preferably 105 or more, more preferably 107 or more.

Table 1

| | | Cap rubber layer | | | | | | | | | | |
|---|---|---|---|---|---|---|---|---|---|---|---|---|
| | | A1 | A2 | A3 | A4 | A5 | A6 | A7 | A8 | A9 | A10 | A11 |
| Compounding amount (part by mass) | | | | | | | | | | | | |
| | NR | 70 | 70 | 70 | 70 | 70 | 70 | 70 | 50 | 70 | 70 | 50 |
| | BR1 | 30 | 30 | 30 | 20 | 20 | 20 | 10 | 40 | 20 | 10 | 40 |
| | BR2 | - | - | - | 10 | 10 | 10 | 20 | 10 | - | - | - |
| | BR3 | - | - | - | - | - | - | - | - | 10 | 20 | 10 |
| | Carbon black | 50 | 30 | 30 | 50 | 30 | 30 | 30 | 30 | 30 | 30 | 30 |
| | Silica1 | - | 30 | - | - | 30 | - | - | - | - | - | - |
| | Silica2 | - | - | 30 | - | - | 30 | 30 | 30 | 30 | 30 | 30 |
| | Silane coupling agent | - | 2.4 | 3.0 | - | 2.4 | 3.0 | 3.0 | 3.0 | 3.0 | 3.0 | 3.0 |
| | Wax | 1.5 | 1.5 | 1.5 | 1.5 | 1.5 | 1.5 | 1.5 | 1.5 | 1.5 | 1.5 | 1.5 |
| | Antioxidant | 2.0 | 2.0 | 2.0 | 2.0 | 2.0 | 2.0 | 2.0 | 2.0 | 2.0 | 2.0 | 2.0 |
| | Stearic acid | 2.5 | 2.5 | 2.5 | 2.5 | 2.5 | 2.5 | 2.5 | 2.5 | 2.5 | 2.5 | 2.5 |
| | Zinc oxide | 2.5 | 2.5 | 2.5 | 2.5 | 2.5 | 2.5 | 2.5 | 2.5 | 2.5 | 2.5 | 2.5 |
| | Sulfur | 1.3 | 1.3 | 1.3 | 1.3 | 1.3 | 1.3 | 1.3 | 1.3 | 1.3 | 1.3 | 1.3 |
| | Vulcanization accelerator 1 | 1.5 | 1.5 | 1.5 | 1.5 | 1.5 | 1.5 | 1.5 | 1.5 | 1.5 | 1.5 | 1.5 |
| | Vulcanization accelerator 2 | - | 1.0 | 1.0 | - | 1.0 | 1.0 | 1.0 | 1.0 | 1.0 | 1.0 | 1.0 |

(continued)

| | Cap rubber layer | | | | | | | | | | |
|---|---|---|---|---|---|---|---|---|---|---|---|
| | A1 | A2 | A3 | A4 | A5 | A6 | A7 | A8 | A9 | A10 | A11 |
| Compounding amount (part by mass) | | | | | | | | | | | |
| Total cis content in BR (% by mass) | 97 | 97 | 97 | 79 | 79 | 79 | 60 | 86 | 77 | 56 | 85 |
| Total cis content in total amount of rubber composition (% by mass) | 99 | 99 | 99 | 94 | 94 | 94 | 88 | 93 | 93 | 87 | 92 |
| 70°C tan $\delta$ | 0.13 | 0.12 | 0.12 | 0.14 | 0.10 | 0.10 | 0.09 | 0.09 | 0.09 | 0.08 | 0.07 |
| Breaking energy | 6550 | 6600 | 6810 | 6390 | 6460 | 6700 | 6650 | 5120 | 6700 | 6610 | 5100 |

Table 2

| | Base rubber layer | | |
|---|---|---|---|
| | B1 | B2 | B3 |
| Compounding amount (part by mass) | | | |
| NR | 100 | 100 | 100 |
| Carbon black | 35 | 35 | 40 |
| Silica 1 | 5.0 | 10 | 5.0 |
| Silane coupling agent | - | 1.0 | - |
| Antioxidant | 1.5 | 1.5 | 1.5 |
| Stearic acid | 2.0 | 2.0 | 2.0 |
| Zinc oxide | 3.5 | 3.5 | 3.5 |
| Sulfur | 2.5 | 2.5 | 3.2 |
| Vulcanization accelerator 3 | 1.5 | 1.5 | 9.9 |
| 70°C tan $\delta$ | 0.06 | 0.04 | 0.03 |

Table 3

| | Comparative example | | | | | | | | |
|---|---|---|---|---|---|---|---|---|---|
| | 1 | 2 | 3 | 4 | 5 | 6 | 7 | 8 | 9 |
| Cap rubber layer | A1 | A2 | A3 | A4 | A5 | A6 | A4 | A4 | A4 |
| Base rubber layer | - | - | - | - | - | - | B1 | B1 | B3 |
| S2/S1 | 0.20 | 0.20 | 0.20 | 0.20 | 0.20 | 0.90 | 0.20 | 0.20 | 0.20 |
| (Tb)/(Tc + Tb) | - | - | - | - | - | - | 0.16 | 0.09 | 0.16 |
| Index | | | | | | | | | |
| Fuel efficiency | 100 | 103 | 100 | 95 | 110 | 115 | 104 | 99 | 109 |
| Breaking resistance | 100 | 89 | 93 | 91 | 93 | 104 | 92 | 91 | 93 |
| Abrasion resistance | 100 | 95 | 100 | 88 | 99 | 85 | 91 | 90 | 91 |
| | Example | | | | | | | | |
| | 1 | 2 | 3 | 4 | 5 | 6 | 7 | 8 | 9 |
| Cap rubber layer | A6 | A7 | A8 | A9 | A10 | A11 | A9 | A9 | A9 |
| Base rubber layer | - | - | - | - | - | - | - | B1 | B2 |
| S2/S1 | 0.20 | 0.20 | 0.20 | 0.20 | 0.20 | 0.20 | 0.60 | 0.20 | 0.20 |

(continued)

| | Example | | | | | | | | |
|---|---|---|---|---|---|---|---|---|---|
| | 1 | 2 | 3 | 4 | 5 | 6 | 7 | 8 | 9 |
| (Tb)/(Tc + Tb) | - | - | - | - | - | - | - | 0.16 | 0.16 |
| Index | | | | | | | | | |
| Fuel efficiency | 115 | 121 | 111 | 117 | 125 | 112 | 131 | 121 | 124 |
| Breaking resistance | 104 | 100 | 100 | 105 | 102 | 101 | 101 | 106 | 105 |
| Abrasion resistance | 103 | 101 | 120 | 104 | 103 | 121 | 100 | 104 | 106 |

From the results in Tables 1 to 3, it can be found that the tire of the present disclosure comprising a tread, in which the tread is formed of a rubber composition comprising a predetermined rubber component and a predetermined silica, a loss tangent tan $\delta$ of the above-described rubber composition is set within a predetermined range, and a ratio of a total area of lateral grooves to a total area of circumferential grooves is within a predetermined range, has improved overall performance of fuel efficiency, breaking resistance, and abrasion resistance.

<Embodimens>

An example of the embodiment of the present disclosure is shown below.
[1] A tire comprising a tread, wherein a cap rubber layer of an outer surface of the tread is formed of a rubber composition comprising a rubber component having a total content of 90% by mass or more of an isoprene-based rubber and a butadiene rubber and silica having a nitrogen adsorption specific surface area ($N_2SA$) of 180 $m^2$/g or more, wherein a total cis content in the butadiene rubber is less than 90% by mass, wherein a tan $\delta$ at 70°C of the rubber composition of the cap rubber layer is less than 0.15, wherein the tread has circumferential grooves extending continuously in a tire circumferential direction and lateral grooves extending in a tire width direction, wherein a ratio of a total area S2 of the lateral grooves to a total area S1 of the circumferential grooves (S2/S1) is less than 0.80, wherein the total cis content in BR is, when two or more BRs are used, the value obtained by multiplying the cis content of each BR by the mass fraction in the total amount of BR, and summing these values, wherein the tan $\delta$ at 70°C is a loss tangent tan $\delta$ under a condition of a temperature at 70°C, an initial strain of 10%, a dynamic strain of $\pm$ 2%, and a frequency of 10 Hz, and wherein the N2SA of silica is a value measured by a BET method according to ASTM D3037-93.
[2] The tire of the above [1], wherein the tan $\delta$ at 70°C of the rubber composition of the cap rubber layer is 0.03 to 0.12.
[3] The tire of the above [1] or [2], wherein the total cis content in the butadiene rubber is 30 to 89% by mass.
[4] The tire of any one of the above [1] to [3], wherein, when a strength at break at 23°C of the rubber composition of the cap rubber layer is TB (MPa) and an elongation at break at 23°C of the rubber composition of the cap rubber layer is EB (%), a breaking energy calculated by TB $\times$ EB/2 is 5000 or more, wherein the strength at break TB (MPa) and the elongation at break EB (%) are obtained by measurement of a No. 3 dumbbell type test piece formed of each test vulcanized rubber composition in an atmosphere of 23°C in accordance with JIS K 6251: 2017.
[5] The tire of any one of the above [1] to [4], wherein a total cis content in a total amount of the rubber component is 60 to 95% by mass.
[6] The tire of any one of the above [1] to [5], wherein the rubber composition of the cap rubber layer comprises 20 parts by mass or more of silica having a nitrogen adsorption specific surface area ($N_2SA$) of 180 $m^2$/g or more based on 100 parts by mass of the rubber component.
[7] The tire of any one of the above [1] to [6], wherein the rubber composition of the cap rubber layer comprises a glycerin fatty acid ester.
[8] The tire of any one of the above [1] to [7], wherein the tread has a base rubber layer adjacent to inside in a radial direction of the cap rubber layer, and wherein, when a thickness of the cap rubber layer is Tc (mm) and a thickness of the base rubber layer is Tb (mm), Tc and Tb satisfy the following inequality (1).

$$0.10 \leq (Tb)/(Tc + Tb) \leq 0.35 \ (1)$$

[9] The tire of any one of the above [1] to [8], wherein the tread has a base rubber layer adjacent to inside in the radial direction of the cap rubber layer, and wherein a tan $\delta$ at 70°C of the rubber composition of the base rubber layer is 0.01 to 0.07.

EXPLANATION OF NUMERALS

1. Tire
2. Tread part
3. Center circumferential groove
4. Middle circumferential groove
5. Shoulder circumferential groove
6. Center land part
7. Middle land part
8. Shoulder land part
9. Center lateral groove
13. Center sipe
15. Middle lateral groove
21. Shoulder lateral groove
Te. Tread end
3A. Center long side part
3B. Center short side part
L0. Length in tire circumferential direction of center long side part 3A
L2. Length in tire circumferential direction of center short side part 3B
$\theta$1. Angle with respect to tire circumferential direction of center long side part 3A
$\theta$2. Angle with respect to tire circumferential direction of center short side part 3B
C. Tire equator

**Claims**

1. A tire comprising a tread,

   wherein a cap rubber layer of an outer surface of the tread is formed of a rubber composition comprising a rubber component having a total content of 90% by mass or more of an isoprene-based rubber and a butadiene rubber and silica having a nitrogen adsorption specific surface area ($N_2SA$) of 180 $m^2$/g or more,
   wherein a total cis content in the butadiene rubber is less than 90% by mass,
   wherein a tan $\delta$ at 70°C of the rubber composition of the cap rubber layer is less than 0.15,
   wherein the tread has circumferential grooves extending continuously in a tire circumferential direction and lateral grooves extending in a tire width direction,
   wherein a ratio of a total area S2 of the lateral grooves to a total area S1 of the circumferential grooves (S2/S1) is less than 0.80,
   wherein the total cis content in BR is, when two or more BRs are used, the value obtained by multiplying the cis content of each BR by the mass fraction in the total amount of BR, and summing these values,
   wherein the tan $\delta$ at 70°C is a loss tangent tan $\delta$ under a condition of a temperature at 70°C, an initial strain of 10%, a dynamic strain of $\pm$ 2%, and a frequency of 10 Hz,
   wherein the N2SA of silica is a value measured by a BET method according to ASTM D3037-93, and wherein the cis content is calculated by infrared absorption spectrometry according to JIS K 6239-2: 2017.

2. The tire of claim 1, wherein the tan $\delta$ at 70°C of the rubber composition of the cap rubber layer is 0.03 to 0.12.

3. The tire of claim 1 or 2, wherein the total cis content in the butadiene rubber is 30 to 89% by mass.

4. The tire of any one of claims 1 to 3, wherein, when a strength at break at 23°C of the rubber composition of the cap rubber layer is TB (MPa) and an elongation at break at 23°C of the rubber composition of the cap rubber layer is EB (%), a breaking energy calculated by TB $\times$ EB/2 is 5000 or more,
   wherein the strength at break TB (MPa) and the elongation at break EB (%) are obtained by measurement of a No. 3 dumbbell type test piece formed of each test vulcanized rubber composition in an atmosphere of 23°C in accordance with JIS K 6251: 2017.

5. The tire of any one of claims 1 to 4, wherein a total cis content in a total amount of the rubber component is 60 to 95% by mass.

6. The tire of any one of claims 1 to 5, wherein the rubber composition of the cap rubber layer comprises 20 parts by mass or more of silica having a nitrogen adsorption specific surface area ($N_2SA$) of 180 $m^2$/g or more based on 100 parts by mass of the rubber component.

7. The tire of any one of claims 1 to 6, wherein the rubber composition of the cap rubber layer comprises a glycerin fatty acid ester.

8. The tire of any one of claims 1 to 7, wherein the tread has a base rubber layer adjacent to inside in a radial direction of the cap rubber layer, and
wherein, when a thickness of the cap rubber layer is Tc (mm) and a thickness of the base rubber layer is Tb (mm), Tc and Tb satisfy the following inequality (1),

$$0.10 \leq (Tb)/(Tc + Tb) \leq 0.35 \ (1)$$

9. The tire of any one of claims 1 to 8, wherein the tread has a base rubber layer adjacent to inside in a radial direction of the cap rubber layer, and
wherein a tan $\delta$ at 70°C of the rubber composition of the base rubber layer is 0.01 to 0.07.

**Patentansprüche**

1. Reifen, umfassend einen Laufstreifen,

wobei eine Deckkautschukschicht einer äußeren Oberfläche des Laufstreifens mit einer Kautschukzusammensetzung gebildet ist, welche eine Kautschukkomponente, die einen Gesamtgehalt von 90 Massen-% oder mehr eines Isopren-basierten Kautschuks und eines Butadien-Kautschuks aufweist, und Siliziumdioxid, das eine spezifische Stickstoffadsorptionsoberfläche ($N_2SA$) von 180 $m^2$/g oder mehr aufweist, umfasst,
wobei ein Gesamt-cis-Gehalt in dem Butadien-Kautschuk weniger als 90 Massen-% beträgt,
wobei ein tan $\delta$ bei 70°C der Kautschukzusammensetzung der Deckkautschukschicht weniger als 0,15 beträgt,
wobei der Laufstreifen Umfangsrillen, die sich durchgehend in einer Reifenumfangsrichtung erstrecken, und Querrillen, die sich in einer Reifenbreitenrichtung erstrecken, aufweist,
wobei ein Verhältnis einer Gesamtfläche S2 der Querrillen zu einer Gesamtfläche S1 der Umfangsrillen (S2/S1) weniger als 0,80 beträgt,
wobei der Gesamt-cis-Gehalt in BR, wenn zwei oder mehr BRs verwendet werden, der durch Multiplizieren des cis-Gehalts jedes BR mit dem Massenbruch in der Gesamtmenge an BR und Summieren dieser Werte erhaltene Wert ist,
wobei der tan $\delta$ bei 70°C ein Verlusttangens tan $\delta$ unter Bedingungen einer Temperatur bei 70°C, einer anfänglichen Dehnung von 10%, einer dynamischen Dehnung von $\pm$2% und einer Frequenz von 10 Hz ist,
wobei die $N_2SA$ von Siliziumdioxid ein durch ein BET-Verfahren gemäß ASTM D3037-93 gemessener Wert ist, und wobei der cis-Gehalt durch Infrarot-Absorptions-Spektrometrie gemäß JIS K 6239-2:2017 berechnet ist.

2. Reifen nach Anspruch 1, wobei der tan $\delta$ bei 70°C der Kautschukzusammensetzung der Deckkautschukschicht 0,03 bis 0,12 beträgt.

3. Reifen nach Anspruch 1 oder 2, wobei der Gesamt-cis-Gehalt in dem Butadien-Kautschuk 30 bis 89 Massen-% beträgt.

4. Reifen nach einem der Ansprüche 1 bis 3, wobei, wenn eine Bruchfestigkeit bei 23°C der Kautschukzusammensetzung der Deckkautschukschicht TB (MPa) ist, und eine Bruchdehnung bei 23°C der Kautschukzusammensetzung der Deckkautschukschicht EB (%) ist, eine durch TB $\times$ EB/2 berechnete Bruchenergie 5000 oder mehr beträgt,
wobei die Bruchfestigkeit TB (MPa) und die Bruchdehnung EB (%) durch Messung eines mit der jeweiligen vulkanisierten Prüfkautschukzusammensetzung gebildeten Prüfkörpers vom Hantel-Typ Nr. 3 in einer Atmosphäre von 23°C gemäß JIS K 6251:2017 erhalten sind.

**5.** Reifen nach einem der Ansprüche 1 bis 4, wobei ein Gesamt-cis-Gehalt in einer Gesamtmenge der Kautschukkomponente 60 bis 95 Massen-% beträgt.

**6.** Reifen nach einem der Ansprüche 1 bis 5, wobei die Kautschukzusammensetzung der Deckkautschukschicht, bezogen auf 100 Massenteile der Kautschukkomponente, 20 Massenteile oder mehr an Siliziumdioxid umfasst, das eine spezifische Stickstoffadsorptionsoberfläche ($N_2SA$) von 180 m$^2$/g oder mehr aufweist.

**7.** Reifen nach einem der Ansprüche 1 bis 6, wobei die Kautschukzusammensetzung der Deckkautschukschicht einen Glycerin-Fettsäure-Ester umfasst.

**8.** Reifen nach einem der Ansprüche 1 bis 7, wobei der Laufstreifen eine Basiskautschukschicht aufweist, die in einer Radialrichtung innerseits zu der Deckkautschukschicht benachbart ist, und
wobei, wenn eine Dicke der Deckkautschukschicht Tc (mm) ist, und eine Dicke der Basiskautschukschicht Tb (mm) ist, Tc und Tb der folgenden Ungleichung (1) genügen,

$$0,10 \leq (Tb)/(Tc + Tb) \leq 0,35 \quad (1)$$

**9.** Reifen nach einem der Ansprüche 1 bis 8, wobei der Laufstreifen eine Basiskautschukschicht aufweist, die in einer Radialrichtung innerseits zu der Deckkautschukschicht benachbart ist, und
wobei ein tan δ bei 70°C der Kautschukzusammensetzung der Basiskautschukschicht 0,01 bis 0,07 beträgt.

**Revendications**

**1.** Pneumatique comprenant une bande de roulement,

dans lequel une couche de caoutchouc de coiffe d'une surface externe de la bande de roulement est formée d'une composition de caoutchouc comprenant un composant de caoutchouc ayant une teneur totale de 90 % en masse ou plus d'un caoutchouc à base d'isoprène et d'un caoutchouc de butadiène et de silice ayant une surface spécifique d'adsorption d'azote ($N_2SA$) de 180 m$^2$/g ou plus,
dans lequel une teneur en cis totale dans le caoutchouc de butadiène est de moins de 90 % en masse,
dans lequel une tan δ à 70 °C de la composition de caoutchouc de la couche de caoutchouc de coiffe est de moins de 0,15,
dans lequel la bande de roulement a des rainures circonférentielles s'étendant en continu dans une direction circonférentielle de pneumatique et des rainures latérales s'étendent dans une direction de largeur de pneumatique,
dans lequel un rapport d'une surface totale S2 des rainures latérales à une surface totale S1 des rainures circonférentielles (S2/S1) est de moins de 0,80,
dans lequel la teneur en cis totale en BR est, lorsque deux ou plus de deux BR sont utilisés, la valeur obtenue en multipliant la teneur en cis de chaque BR par la fraction de masse dans la quantité totale de BR et en additionnant ces valeurs,
dans lequel la tan δ à 70 °C est une tangente de perte tan δ sous une condition d'une température à 70 °C, d'une contrainte initiale de 10 %, d'une contrainte dynamique de ± 2 %, et d'une fréquence de 10 Hz,
dans lequel la N2SA de la silice est une valeur mesurée par un procédé BET selon la norme ASTM D3037-93 et la teneur en cis est calculée par spectrométrie d'absorption infrarouge selon la norme JIS K 6239-2 : 2017.

**2.** Pneumatique selon la revendication 1, dans lequel la tan δ à 70 °C de la composition de caoutchouc de la couche de caoutchouc de coiffe est de 0,03 à 0,12.

**3.** Pneumatique selon la revendication 1 ou 2, dans lequel la teneur en cis totale dans le caoutchouc de butadiène est de 30 à 89 % en masse.

**4.** Pneumatique selon l'une quelconque des revendications 1 à 3, dans lequel, lorqu'une résistance à la rupture à 23 °C de la composition de caoutchouc de la couche de caoutchouc de coiffe est TB (MPa) et qu'une élongation à la rupture à 23 °C de la composition de caoutchouc de la couche de caoutchouc de coiffe est EB (%), une énergie de rupture calculée par TB × EB / 2 est de 5 000 ou plus,
dans lequel la résistance à la rupture TB (MPa) et l'élongation à la rupture EB (%) sont obtenues par mesure d'une pièce de test de type dumbbell n° 3 formée de chacune d'une composition de caoutchouc vulcanisé de test dans une atmosphère de 23 °C selon la norme JIS K 6251 : 2017.

5. Pneumatique selon l'une quelconque des revendications 1 à 4, dans lequel une teneur en cis totale dans une quantité totale du composant de caoutchouc est de 60 à 95 % en masse.

6. Pneumatique selon l'une quelconque des revendications 1 à 5, dans lequel la composition de caoutchouc de la couche de caoutchouc de coiffe comprend 20 parties en masse ou plus de silice ayant une surface d'adsorption spécifique d'azote ($N_2SA$) de 180 $m^2$/g ou plus sur la base de 100 parties en masse du composant de caoutchouc.

7. Pneumatique selon l'une quelconque des revendications 1 à 6, dans lequel la composition de caoutchouc de la couche de caoutchouc de coiffe comprend un ester d'acide gras de glycérine.

8. Pneumatique selon l'une quelconque des revendications 1 à 7, dans lequel la bande de roulement a une couche de caoutchouc de base adjacente à l'intérieur dans une direction radiale de la couche de caoutchouc de coiffe et dans lequel lorsqu'une épaisseur de la couche de caoutchouc de coiffe est Tc (mm) et qu'une épaisseur de la couche de caoutchouc de base est Tb (mm), Tc et Tb satisfont l'inégalité suivante (1),

$$0,10 \leq (Tb) / (Tc + Tb) \leq 0,35 \qquad (1).$$

9. Pneumatique selon l'une quelconque des revendications 1 à 8, dans lequel la bande de roulement a une couche de caoutchouc de base adjacente à l'intérieur dans une direction radiale d la couche de caoutchouc de coiffe et dans lequel une tan $\delta$ à 70 °C de la composition de caoutchouc de la couche de caoutchouc de base est de 0,01 à 0,07.

# FIG. 1

**EP 4 015 239 B1**

**REFERENCES CITED IN THE DESCRIPTION**

**Patent documents cited in the description**

- JP H06279624 A
- JP 2012136581 B